# EUROPÄISCHE PATENTANMELDUNG

(11) **EP 2 522 890 A1**
(43) Veröffentlichungstag der Anmeldung: **14.11.2012**
(21) Anmeldenummer: 12166926.1
(22) Anmeldetag: 07.05.2012
(51) Int. Cl.: F16K 15/06, F16K 27/02, E03C 1/10

(54) **Vorrichtung zur Handhabung eines flüssigen Mediums**

(30) Priorität: 12.05.2011 DE 102011106265
(71) Anmelder: Honeywell Technologies Sarl, 1180 Rolle (CH)
(72) Erfinder: Raule, Steffen, 69412 Eberbach (DE)
(74) Vertreter: Sturm, Christoph

(57) **Zusammenfassung**

Vorrichtung (10) zur Handhabung eines flüssigen Mediums, insbesondere von Wasser, mit einem Gehäuse (11), wobei das Gehäuse (11) eine Einlasskammer (12) für das flüssige Medium und eine Auslasskammer (13) für das flüssige Medium definiert, die durch ein Druckmindererventil (14) derart voneinander getrennt bzw. miteinander gekoppelt sind, dass dann, wenn ein in der Auslasskammer (13) herrschender Auslasskammerdruck kleiner als ein Grenzwert ist, das Druckmindererventil (14) zur Kopplung von Einlasskammer (12) und Auslasskammer (13) automatisch geöffnet ist, und dass dann, wenn der in der Auslasskammer (13) herrschende Auslasskammerdruck größer als der Grenzwert ist, das Druckmindererventil (14) zur Trennung von Einlasskammer (12) und Auslasskammer (13) automatisch geschlossen ist, wobei sowohl in der Einlasskammer (12) des Gehäuses (11) als auch in der Auslasskammer (13) des Gehäuses (11) jeweils ein Rückflussverhindererventil (21, 22) integriert ist.

## Beschreibung

Die Erfindung betrifft eine Vorrichtung zur Handhabung eines flüssigen Mediums, insbesondere von Wasser, nach dem Oberbegriff des Anspruchs 1.

Die hier vorliegende Erfindung betrifft eine Vorrichtung zur Handhabung eines flüssigen Mediums, insbesondere zur Handhabung von Wasser. Solche Vorrichtungen werden auch als Armaturen bezeichnet.

Aus der Praxis ist eine Vielzahl unterschiedlicher Armaturen bekannt. So zum Beispiel Armaturen in Form von Druckreglern, in Form von Druckminderern, in Form von Rückflussverhinderern oder auch in Form von Systemtrennern. Ferner sind Armaturen in Form von Absperrventilen oder auch in Form von Füllaramaturen bekannt. Ferner ist es bekannt, mehrere solcher als getrennte Baugruppen ausgeführter Armaturen beim Aufbau eines Systems zur Handhabung eines flüssigen Mediums, so z. B. beim Aufbau eine Trinkwasserversorgungssystems oder eines Heizungssystems, miteinander durch Verschrauben zu kombinieren. Hierdurch entsteht dann nicht nur ein Abdichtbedarf an den gehäuseseitigen Schnittstellen der einzelnen Baugruppen, vielmehr entsteht hierdurch auch ein relativ großer Platzbedarf.

Der Erfindung liegt die Aufgabe zu Grunde, eine neuartige Vorrichtung zur Handhabung eines flüssigen Mediums, insbesondere von Wasser zu schaffen. Diese Aufgabe wird durch eine Vorrichtung Wasser gemäß Anspruch 1 gelöst.

Mit der hier vorliegenden Erfindung wird erstmals eine Vorrichtung zur Handhabung eines flüssigen Mediums vorgeschlagen, die ein Druckmindererventil mit zwei Rückflussverhindererventilen kombiniert. In das Gehäuse der erfindungsgemäßen Vorrichtung sind einerseits das Druckmindererventil und andererseits die beiden Rückflussverhindererventile integriert, nämlich ein erstes Rückflussverhindererventil in die Einlasskammer des Gehäuses und ein zweites Rückflussverhindererventil in die Auslasskammer des Gehäuses, wobei die Einlasskammer des Gehäuses und die Auslasskammer des Gehäuses abhängig vom in der Auslasskammer herrschenden Auslasskammerdruck durch das Druckmindererventil entweder gekoppelt oder voneinander getrennt sind. Die erfindungsgemäße Vorrichtung zur Handhabung von Wasser stellt demnach eine hohe Funktionsintegration bereit. Dadurch können Schnittstellen zwischen bislang getrennten Armaturen und somit mögliche Dichtstellen zwischen denselben sowie mögliche Leckagen auf ein absolutes Minimum reduziert werden. Ferner kann der benötigte Platzbedarf reduziert werden.

Vorzugsweise sind in das Gehäuse weiterhin mehrere Prüfstutzen integriert, nämlich einer erster mit der Einlasskammer des Gehäuses in Verbindung stehender Prüfstutzen und ein zweiter mit der Auslasskammer des Gehäuses in Verbindung stehender Prüfstutzen. Durch Integration der Prüfstutzen in das Gehäuse ist eine weitere Funktionsintegration, eine weitere Reduzierung von Schnittstellen sowie eine weitere Reduzierung des Platzbedarfs möglich.

Nach einer vorteilhaften Weiterbildung der Erfindung ist in das Gehäuses weiterhin ein manuell betätigbares Absperrventil integriert, welches in geschlossener Stellung das Druckmindererventil permanent geschlossen hält, und welches in geöffneter Stellung das automatische Öffnen und Schließen des Druckmindererventils abhängig vom in der Auslasskammer herrschenden Auslasskammerdruck zulässt. Durch die obige Integration eines manuell betätigbaren Absperrventils in das Gehäuse ist eine weitere Funktionsintegration und damit weitere Reduzierung von Schnittstellen sowie des Platzbedarfs möglich.

Bevorzugte Weiterbildungen der Erfindung ergeben sich aus den Unteransprüchen und der nachfolgenden Beschreibung. Nachfolgend wird ein Ausführungsbeispiel der Erfindung, ohne hierauf beschränkt zu sein, anhand der Zeichnung näher erläutert. In der Zeichnung zeigt:
- Fig. 1: einen Querschnitt durch eine erfindungsgemäße Vorrichtung zur Handhabung eines flüssigen Mediums in einem ersten Zustand derselben; und
- Fig. 2: einen Querschnitt durch die erfindungsgemäße Vorrichtung zur Handhabung eines flüssigen Mediums in einem zweiten Zustand derselben.

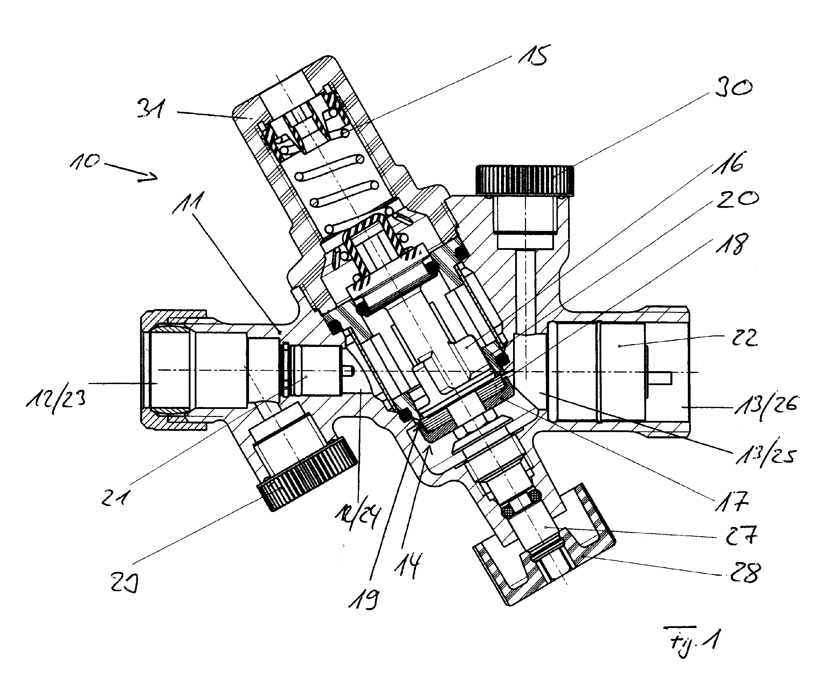

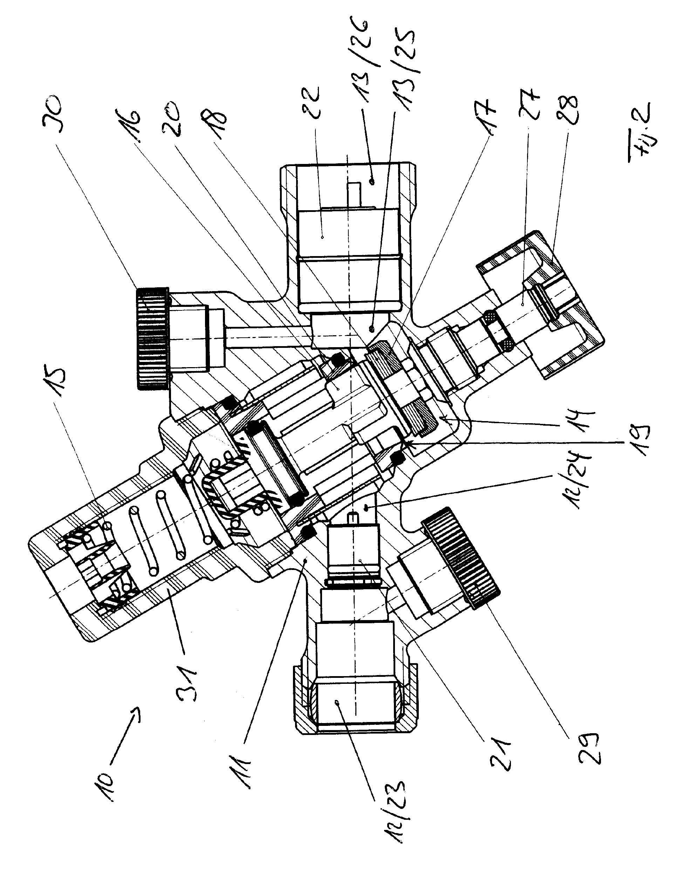

Die hier vorliegende Erfindung betrifft eine Vorrichtung zur Handhabung eines flüssigen Mediums, insbesondere eine Armatur zur Handhabung von Wasser, wie zum Beispiel eine Armatur eines Trinkwasserversorgungssystems. Fig. 1 und 2 zeigen einen Querschnitt durch ein bevorzugtes Ausführungsbeispiel einer erfindungsgemäßen Vorrichtung 10 zur Handhabung eines flüssigen Mediums, wobei die Vorrichtung 10 ein Gehäuse 11 umfasst, welches eine Einlasskammer 12 für das flüssige Medium und eine Auslasskammer 13 für dasselbe definiert.

In das Gehäuse 11 der erfindungsgemäßen Vorrichtung 10 ist ein Druckmindererventil 14 integriert, über welches die Einlasskammer 12 und die Auslasskammer 13 abhängig von dem in der Auslasskammer 13 herrschenden Auslasskammerdruck entweder miteinander gekoppelt oder voneinander getrennt sind, nämlich derart, dass dann, wenn der in der Auslasskammer 13 herrschende Auslasskammerdruck größer als ein Grenzwert ist, das Druckmindererventil zur Trennung von Einlasskammer 12 und Auslasskammer 13 automatisch geschlossen ist, wohingegen dann, wenn der in der Auslasskammer 13 herrschende Auslasskammerdruck kleiner als ein Grenzwert ist, das Druckmindererventil 14 zur Kopplung von Einlasskammer 12 und Auslasskammer 13 automatisch geöffnet ist.

Der Grenzwert für den Auslasskammerdruck, bei dessen Unterschreiten das Druckmindererventil 14 automatisch öffnet, wird durch ein Federelement 15 des Druckmindererventils 14 bestimmt, welches auf einen Kolben 16 des Druckmindererventils 14 in Öffnungsrichtung desselben einwirkt. Gegen diese vom Federelement 15 bereitgestellte Kraft wirkt eine Kraft, die von dem in der Auslasskammer 13 herrschenden Auslasskammerdruck abhängig ist, nämlich über einen Ventilteller 17 des Druckmindererventils 14, der in der Auslasskammer 13 positioniert ist. Dieser Ventilteller 17 nimmt ein Dichtelement 18 auf, welches dann, wenn der in der Auslasskammer 13 herrschende Auslasskammerdruck größer als der vom Federelement 15 bestimmte Grenzwert ist, dass Dichtelement 18 des Druckmindererventils 14 gegen einen Ventilsitz 19 des Druckmindererventils 14 drückt (siehe Fig. 1), wohingegen dann, wenn der in der Auslasskammer 13 herrschende Auslasskammerdruck kleiner als der vom Federelement 15 vorgegebene Grenzwert ist, das Dichtelement 18 vom Ventilsitz 19 abgehoben ist (siehe Fig. 2). Diese grundsätzliche Funktion eines Druckmindererventils 14 ist dem hier angesprochenen Fachmann geläufig. Der Ventilsitz 19 für das Dichtelement 18 des Druckmindererventils 14 ist von einem in das Gehäuse 11 eingesetzten Einsatz 20 bereitgestellt, wobei der Einsatz 20 über eine mit dem Gehäuse 11 verschraubte Federhaube 31 im Gehäuse 11 geklemmt ist. An Stelle eines solchen kolbengesteuerten Druckmindererventils 14 kann auch ein membrangesteuertes Druckmindererventil zum Einsatz kommen.

Erfindungsgemäß ist sowohl in die Einlasskammer 12 ein Rückflussverhindererventil 21 als auch in die Auslasskammer 13 ein Rückflussverhindererventil 22 integriert. Der Rückflussverhinderer 21, der in die Einlasskammer 12 integriert ist, unterteilt die Einlasskammer 12 in eine bezogen auf den Rückflussverhinderer 21 stromaufwärtige Teilkammer 23 und eine stromabwärtige Teilkammer 24. Der in die Auslasskammer 13 integrierte Rückflussverhinderer 22 unterteilt die Auslasskammer 13 in eine bezogen auf den Rückflussverhinderer 22 bezogene stromaufwärtige Teilkammer 25 und eine stromabwärtige Teilkammer 26.

Das Druckmindererventil 14 ist zwischen die stromabwärtige Teilkammer 24 der Einlasskammer 12 und die stromaufwärtige Teilkammer 25 der Auslasskammer 13 geschaltet.

Dann, wenn das Druckmindererventil 14 auf Grundlage des in der Auslasskammer 13 herrschenden Drucks automatisch geöffnet ist, sind auch die Rückflussverhinderer 21 und 22 automatisch geöffnet, nämlich bei Mediumentnahme aus der Auslasskammer 13. Dann hingegen, wenn das Druckmindererventil 14 auf Basis des in der Auslasskammer 13 herrschenden Auslasskammerdrucks automatisch geschlossen ist, sind auch die Rückflussverhinderer 21 und 22 automatisch geschlossen. Dadurch wird eine hohe Systemsicherheit für die erfindungsgemäße Armatur bereitgestellt.

In das Gehäuse 11 der Vorrichtung 10 ist vorzugsweise weiterhin ein manuell betätigbares Absperrventil 27 integriert, welches von einer Verstellschraube 28 aus manuell betätigt werden kann. Dieses Absperrventil 27 wirkt derart mit dem Druckmindererventil 14 zusammen, dass das Absperrventil 27 in geschlossener Stellung das Druckmindererventil 14 permanent geschlossen hält, also auch dann, wenn der in der Auslasskammer 13 herrschende Druck unterhalb des vorgegebenen Grenzwerts absinkt. Dann hingegen, wenn das Absperrventil 27 geöffnet ist, lässt dasselbe das automatische Öffnen und Schließen des Druckmindererventils 14 abhängig von dem in der Auslasskammer 13 herrschenden Auslasskammerdruck zu.

Ferner sind in das Gehäuse 11 der erfindungsgemäßen Vorrichtung 10 mehrere Prüfstutzen integriert, nämlich ein erster mit der Einlasskammer 12 des Gehäuses 11 in Verbindung stehender Prüfstutzen 29 und ein zweiter, mit der Auslasskammer 13 des Gehäuses 11 in Verbindung stehender Prüfstutzen 30.

Über die beiden Prüfstutzen 29 und 30 können jeweils Prüfeinrichtungen mit der erfindungsgemäßen Vorrichtung 10 gekoppelt werden, um zum Beispiel die Funktionalität des jeweiligen Rückflussverhinderers 21 bzw. 22 durch einen Druckabgriff zu prüfen.

Die erfindungsgemäße Vorrichtung 10 zeichnet sich durch eine hohe Funktionsintegration aus. Hierdurch ist es möglich, beim Aufbau eines Systems zur Handhabung eines flüssigen Mediums, so zum Beispiel bei Aufbau eines Trinkwasserversorgungssystems, die Anzahl von Schnittstellen zwischen bislang getrennt ausgeführten Armaturen und damit mögliche Leckagen zwischen denselben zu verringern.

Ferner kann der Platzbedarf verringert werden, der zum Beispiel bei Aufbau eines Trinkwasserversorgungssystems von den einzelnen Baugruppen benötigt wird.

### Bezugszeichenliste

- 10: Vorrichtung
- 11: Gehäuse
- 12: Einlasskammer
- 13: Auslasskammer
- 14: Druckmindererventil
- 15: Federelement
- 16: Kolben
- 17: Ventilteller
- 18: Dichtelement
- 19: Ventilsitz
- 20: Einsatz
- 21: Rückflussverhindererventil
- 22: Rückflussverhindererventil
- 23: Teilkammer
- 24: Teilkammer
- 25: Teilkammer
- 26: Teilkammer
- 27: Absperrventil
- 28: Betätigungsmittel
- 29: Prüfstutzen
- 30: Prüfstutzen
- 31: Federhaube

## Patentansprüche

1. Vorrichtung zur Handhabung eines flüssigen Mediums, insbesondere von Wasser, mit einem Gehäuse (11), wobei das Gehäuse (11) eine Einlasskammer (12) für das flüssige Medium und eine Auslasskammer (13) für das flüssige Medium definiert, die durch ein Druckmindererventil (14) derart voneinander getrennt bzw. miteinander gekoppelt sind, dass dann, wenn ein in der Auslasskammer (13) herrschender Auslasskammerdruck kleiner als ein Grenzwert ist, das Druckmindererventil (14) zur Kopplung von Einlasskammer (12) und Auslasskammer (13) automatisch geöffnet ist, und dass dann, wenn der in der Auslasskammer (13) herrschende Auslasskammerdruck größer als der Grenzwert ist, das Druckmindererventil (14) zur Trennung von Einlasskammer (12) und Auslasskammer (13) automatisch geschlossen ist, **dadurch gekennzeichnet, dass** sowohl in der Einlasskammer (12) des Gehäuses (11) als auch in der Auslasskammer (13) des Gehäuses (11) jeweils ein Rückflussverhindererventil (21, 22) integriert ist.

2. Vorrichtung nach Anspruch 1, **dadurch gekennzeichnet, dass** die Rückflussverhindererventile (21, 22) dann, wenn das Druckmindererventil (14) geöffnet ist, bei Mediumentnahme aus der Auslasskammer (13) automatisch geöffnet sind, und dass die Rückflussverhindererventile (21, 22) dann, wenn das Druckmindererventil (14) geschlossen ist, automatisch geschlossen sind.

3. Vorrichtung nach Anspruch 1 oder 2, **dadurch gekennzeichnet, dass** in das Gehäuses (11) weiterhin ein manuell betätigbares Absperrventil (27) integriert ist, welches in geschlossener Stellung das Druckmindererventil (14) permanent geschlossen hält, und welches in geöffneter Stellung das automatische Öffnen und Schließen des Druckmindererventils (14) abhängig vom in der Auslasskammer (13) herrschende Auslasskammerdruck zulässt.

4. Vorrichtung nach einem der Ansprüche 1 bis 3, **dadurch gekennzeichnet, dass** in das Gehäuses (11) weiterhin mehrere Prüfstutzen integriert sind, nämlich einer erster mit der Einlasskammer (12) des Gehäuses (11) in Verbindung stehender Prüfstutzen (29) und ein zweiter mit der Auslasskammer (13) des Gehäuses (11) in Verbindung stehender Prüfstutzen (30).

5. Vorrichtung nach Anspruch 4, **dadurch gekennzeichnet, dass** jeder der Prüfstutzen (29, 30) der Aufnahme einer Prüfeinrichtung dient.
